# EUROPÄISCHE PATENTSCHRIFT

(11) **EP 1 300 691 B1**
(45) Veröffentlichungstag und Bekanntmachung des Hinweises auf die Patenterteilung: **23.11.2005**
(21) Anmeldenummer: 02019782.8
(22) Anmeldetag: 04.09.2002
(51) Int. Cl.: G01S 7/48, G01S 17/02, G01B 11/25

(54) **Überwachungsverfahren und optoelektronischer Sensor**
Surveillance method and optoelectronic sensor
Procédé de surveillance et capteur opto-électronique

(30) Priorität: 05.09.2001 DE 10143504
(43) Veröffentlichungstag der Anmeldung: 09.04.2003
(73) Patentinhaber: SICK AG, 79183 Waldkirch, Breisgau (DE)
(72) Erfinder: Braune, Ingolf, 79194 Gundelfingen (DE); Henkel, Olaf, 79276 Reute (DE)
(74) Vertreter: Manitz, Finsterwald & Partner GbR

(56) Entgegenhaltungen:
- EP-A- 0 985 903
- DE-A- 4 405 849
- DE-A- 19 749 435
- DE-A- 19 809 210

## Beschreibung

Die Erfindung betrifft ein Verfahren zur Überwachung eines Überwachungsbereichs mittels eines optoelektronischen Sensors, wobei gemäß einem strukturierten Beleuchtungsmuster Sendelicht in Richtung des Überwachungsbereichs ausgesandt und aus dem Überwachungsbereich empfangen wird, das empfangene Licht in Empfangssignale umgewandelt wird, und die Empfangssignale hinsichtlich des Vorhandenseins oder hinsichtlich einer Bewegung eines Objekts im Überwachungsbereich ausgewertet werden. Die Erfindung betrifft ferner einen entsprechenden optoelektronischen Sensor.

Ein derartiges Überwachungsverfahren und ein derartiger Sensor dienen beispielsweise zur Sicherung des Überwachungsbereichs vor einem unbefugten Eingriff, nämlich indem ein Abschaltsignal oder ein Warnsignal erzeugt wird, falls das Vorhandensein eines Objekts im Überwachungsbereich oder die Bewegung eines solchen Objekts detektiert wird.

Zu diesem Zweck wird der Überwachungsbereich mit dem Sendelicht aktiv beleuchtet, und das aus dem Überwachungsbereich empfangene Sendelicht wird mittels einer Empfangseinrichtung, beispielsweise einer CCD-Kamera aufgenommen. Die entsprechenden Empfangssignale dieser Empfangseinrichtung werden mit Schwellenwerten oder mit Empfangssignalen verglichen, die zu einem früheren Zeitpunkt ermittelt und abgespeichert worden sind. Hieraus kann auf zwischenzeitlich erfolgte Änderungen innerhalb des Überwachungsbereichs geschlossen werden.

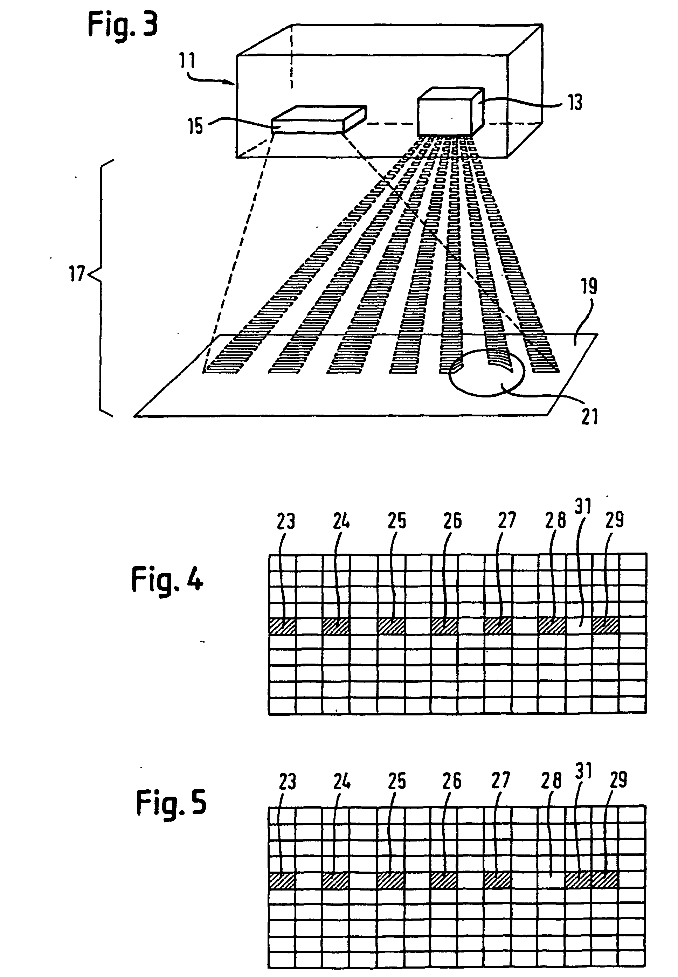

Bei homogenen Objekten, also Objekten, die selbst sowie im Verhältnis zum Hintergrund lediglich einen geringen visuellen Kontrast aufweisen, kann sich das Problem ergeben, daß ein Einbringen derartiger Objekte in den Überwachungsbereich nicht fehlerfrei erkannt wird. Um dieses Problem zu umgehen, wird mit einem strukturierten Beleuchtungsmuster gearbeitet, d. h. das Sendelicht wird gemäß einem Hell/Dunkel-Muster ausgesandt, und/oder das Sendelicht wird empfangsseitig gemäß einem solchen Hell/Dunkel-Muster aufgenommen. Bei Verwendung eines derartigen Beleuchtungsmusters kann, beispielsweise bei einer Triangulationsanordnung von Sendeeinrichtung und Empfangseinrichtung, die Verschiebung auch eines homogenen Objekts erkannt werden. Diese Vorgehensweise kann jedoch wiederum den Nachteil herbeiführen, daß die Empfangseinrichtung nicht zuverlässig auf ihre Funktionsfähigkeit überprüft werden kann (vgl. Fig. 3 bis 5).

Die DE 197 49 435 A1 beschreibt eine Vorrichtung zur dreidimensionalen, flächenhaften, optischen Vermessung von Objekten, bei der eine Projektionseinrichtung eine Serie unterschiedlicher Lichtmuster auf das zu vermessende Objekt projiziert und Abbildungen von den projizierten Lichtmustern auf dem Bildsensor einer Kamera erzeugt. Die Projektionsgitter werden entweder deckungsgleich oder aufeinander justiert in der Bildebene der Projektionseinrichtung abgebildet.

Aus der DE 44 05 849 A1 ist ein Verfahren zum Aufnehmen dreidimensionaler Bilder zum Beobachten gestapelter schachtelförmiger Ladungen bekannt, wobei gemäß der so genannten Raumcode-Lichtmuster-Projektionstechnik verschiedene Lichtmuster projiziert werden. Beispielsweise wird durch die Verwendung von drei verschiedenen Mustern der Ladungsraum in acht keilförmige Bereiche unterteilt.

Aus der EP 0 985 903 A2 ist eine dreidimensionale Messvorrichtung zum Bestimmen der Form eines Objekts bekannt, wobei mittels eines Mehrfachschlitzprojektors mehrere parallele Lichtstrahlen auf das zu vermessende Objekt projiziert werden.

Es ist eine Aufgabe der Erfindung, für ein Überwachungsverfahren bzw. einen optoelektronischen Sensor, bei denen mit einem strukturierten Beleuchtungsmuster gearbeitet wird, die Zuverlässigkeit sowohl hinsichtlich der Detektion von homogenen Objekten als auch hinsichtlich einer Überprüfung der Funktionsfähigkeit der Empfangseinrichtung zu erhöhen.

Diese Aufgabe wird durch ein Verfahren mit den Merkmalen des Anspruchs 1 gelöst.

Die Aufgabe wird für einen optoelektronischen Sensor durch die Merkmale des unabhängigen Anspruchs 21 gelöst.

Bei der Erfindung werden mehrere verschiedene Beleuchtungsmuster verwendet. Dadurch kann die Beobachtung des Überwachungsbereichs mit einer größeren Genauigkeit erfolgen. Da nämlich erfindungsgemäß durch die Verwendung mehrerer unterschiedlicher Beleuchtungsmuster letztlich alle Bereiche bzw. Elemente der Empfangseinrichtung zum Einsatz gelangen können, kann der Sensor mit einer entsprechend höheren Ortsauflösung betrieben werden. Bei der Auswertung der Empfangssignale für die mehreren Beleuchtungsmuster können hierfür jeweils diejenigen Aufnahmebilder bzw. Empfangssignale - oder deren Merkmale - miteinander verglichen werden, die für dasselbe Beleuchtungsmuster aufgenommen worden sind, wie nachfolgend noch erläutert wird.

Durch die Verwendung mehrerer unterschiedlicher Beleuchtungsmuster innerhalb desselben Überwachungsbetriebs kann nicht nur - wie erwünscht - ein homogenes Objekt innerhalb des Überwachungsbereichs detektiert werden. Vielmehr kann auch die Empfangseinrichtung vollständig auf ihre Funktionsfähigkeit getestet werden, nämlich indem die mehreren Beleuchtungsmuster dem Test zugrunde gelegt werden. Die verschiedenen Beleuchtungsmuster können hierfür derartig gewählt werden, daß letztlich alle Bereiche bzw. einzelnen Elemente der Empfangseinrichtung von empfangenem Sendelicht beaufschlagt werden, so daß für alle Bereiche bzw. Elemente überprüft werden kann, ob überhaupt irgendein Empfangssignal ausgegeben wird. Demgegenüber kann ein derartiger Test bei bekannten Überwachungsverfahren bzw. Sensoren nicht mit derselben Zuverlässigkeit durchgeführt werden, da aufgrund der Verwendung eines einzigen strukturierten Beleuchtungsmusters einige Bereiche bzw. Elemente der Empfangseinrichtung zum Zeitpunkt des Tests nicht mit Sendelicht beaufschlagt werden können und somit keine Aussage über die Funktionsfähigkeit dieser Bereiche bzw. Empfangselemente getroffen werden kann.

Bei den Beleuchtungsmustern handelt es sich, soweit ein Objekt innerhalb des Überwachungsbereichs oder die Empfangseinrichtung des Sensors mit Sendelicht beaufschlagt wird, um Hell/Dunkel-Muster. Hierbei können die Übergänge zwischen hellen und dunklen Bereichen dieses Musters im wesentlichen kontinuierlich verlaufen oder im wesentlichen scharf begrenzt sein.

Zu der Erfindung ist noch anzumerken, daß diese nicht auf Sendelicht des optischen Bereichs begrenzt ist, sondern daß auch ein Betrieb im Infrarot- oder Ultraviolett-Bereich möglich ist.

Im Hinblick auf den erläuterten Vorteil eines möglichst vollständigen Tests der Empfangseinrichtung sowie einer erhöhten Auflösung ist es bevorzugt, wenn die Beleuchtungsmuster vollständig komplementär zueinander strukturiert sind. Mit anderen Worten sollen die Beleuchtungsmuster - sendeseitig und/oder empfangsseitig - derartig eingesetzt werden, daß durch sukzessive Verwendung aller Beleuchtungsmuster - insbesondere bei objektfreiem Überwachungsbereich - letztlich grundsätzlich alle Bereiche oder Elemente der Empfangseinrichtung von Sendelicht aus dem Überwachungsbereich beaufschlagt werden.

Die Beleuchtungsmuster können regelmäßig oder unregelmäßig strukturiert sein. Ferner ist für die Beleuchtungsmuster eine Linienform oder eine Matrixform möglich. Auch können die Beleuchtungsmuster durch Polygonzüge bestimmt oder frei geformt sein.

Ferner ist es bevorzugt, wenn die unterschiedlichen Beleuchtungsmuster abwechselnd eingesetzt bzw. verwendet werden. Mit anderen Worten sollen die für die Auswertung benötigten Aufnahmebilder bzw. Empfangssignale in gleichbleibender Abfolge ermittelt werden, um die Aufnahmebilder bzw. Empfangssignale ständig mit früher aufgenommenen Bildern bzw. deren verarbeiteten Daten oder Empfangssignalen vergleichen zu können. Außerdem wird durch einen derartigen alternierenden Einsatz der unterschiedlichen Beleuchtungsmuster erreicht, daß für alle Beleuchtungsmuster der zeitliche Abstand zwischen der Verwendung jeweils desselben Beleuchtungsmusters gleich ist, so daß eine Bewegung eines Objekts im Überwachungsbereich sich hinsichtlich der Auswertung der jeweiligen Empfangssignale für alle Beleuchtungsmuster in im wesentlichen gleicher Weise bemerkbar macht.

Für die Erzeugung der unterschiedlichen Beleuchtungsmuster ist es möglich, jeweils eine eigene zugeordnete Sendeeinrichtung vorzusehen, wobei die mehreren Sendeeinrichtungen abwechselnd angesteuert werden können.

Alternativ oder zusätzlich können für die unterschiedlichen Beleuchtungsmuster unterschiedliche Sendeoptiken und/oder Empfangsoptiken vorgesehen sein, die abwechselnd das Sendelicht in den Überwachungsbereich bzw. aus dem Überwachungsbereich abbilden.

Es ist auch möglich, daß eine oder mehrere Sendeoptiken - und/oder eine oder mehrere Empfangsoptiken - zwischen unterschiedlichen Positionen bewegt werden, die jeweils einem Beleuchtungsmuster entsprechen. Beispielsweise kommt ein Verschieben oder ein Verkippen der jeweiligen Optik in Frage. Zur Erzeugung der unterschiedlichen Beleuchtungsmuster ist es auch möglich, den Sendelichtstrahl sendeseitig und/oder empfangsseitig auf verschiedene optische Achsen umzulenken, beispielsweise mittels eines verkippbaren Spiegels.

Es ist auch möglich, daß zur Verwirklichung der unterschiedlichen Beleuchtungsmuster jeweils eine eigene zugeordnete Empfangseinrichtung vorgesehen ist.

Wie bereits erläutert, kann ein Test durchgeführt werden, ob die Empfangseinrichtung, insbesondere alle Bereiche bzw. Elemente der Empfangseinrichtung, fehlerfrei funktioniert. Hierfür können Empfangssignale zum einen bei aktivierter Sendeeinrichtung und zum anderen bei deaktivierter Sendeeinrichtung ermittelt werden, und diese Empfangssignale können miteinander verglichen oder mittels geeigneter Algorithmen verarbeitet werden. Falls ein derartiger Vergleich ergibt, daß die Empfangssignale sich nicht oder nicht hinreichend voneinander unterscheiden, kann auf einen Defekt des entsprechenden Bereichs bzw. Elements der Empfangseinrichtung geschlossen werden. Wie bereits erläutert ist es von besonderem Vorteil, wenn ein derartiger Test derartig für mehrere unterschiedliche Beleuchtungsmuster durchgeführt wird, daß alle Bereiche bzw. alle Elemente der Empfangseinrichtung erfaßt sind.

Weitere Ausführungsformen der Erfindung sind in den Unteransprüchen genannt.
Die Erfindung wird nachfolgend beispielhaft unter Bezugnahme auf die Zeichnungen erläutert; in diesen zeigen:
- Fig. 1: eine schematische Perspektivansicht eines erfindungsgemäßen optoelektronischen Sensors,
- Fig. 2a, 2b und 2c: unterschiedliche Beleuchtungsmuster,
- Fig. 3: einen Sensor nach dem Stand der Technik, und
- Fig. 4 und 5: Beleuchtungsmuster dieses Sensors.

Fig. 3 zeigt einen bekannten optoelektronischen Sensor 11 mit einer Sendeeinrichtung 13 und einer Empfangseinrichtung 15 mit mehreren Empfangselementen. Die Sendeeinrichtung 13 emittiert Sendelicht gemäß einem strukturierten Beleuchtungsmuster in Richtung eines Überwachungsbereichs 17.

Der Überwachungsbereich 17 ist durch einen Hintergrund 19 begrenzt. Innerhalb des Überwachungsbereichs 17 befindet sich ein Objekt 21. Das aus dem Überwachungsbereich 17, also von dem Objekt 21 bzw. dem Hintergrund 19 reflektierte Sendelicht wird von der Empfangseinrichtung 15 erfaßt.

Fig. 4 zeigt das Bild, das die Empfangseinrichtung 15 bei objektfreiem Überwachungsbereich 17 aufnimmt und in entsprechende Empfangssignale umwandelt. Die gezeigte Rasterung dieses Bildes ergibt sich aus der entsprechenden Unterteilung der Sendeeinrichtung 13. Sofern sich kein Objekt 21 in dem Überwachungsbereich 17 befindet, wird die Empfangseinrichtung 15 entsprechend dem strukturierten Beleuchtungsmuster mit Musterbereichen 23 bis 29 (in Fig. 3 bis 5 schraffiert eingezeichnet) von reflektiertem Sendelicht beaufschlagt.

Falls in diesem objektfreien Zustand des Überwachungsbereichs 17 die Empfangseinrichtung 15 auf ihre Funktionsfähigkeit getestet werden soll, kann ein derartiger Test letztlich nur auf Grundlage der Musterbereiche 23 bis 29 zuverlässig durchgeführt werden. Nur für diejenigen Empfangselemente der Empfangseinrichtung 15, die hinsichtlich ihrer Anordnung den Musterbereichen 23 bis 29 entsprechen bzw. die die Musterbereiche 23 bis 29 abbilden, kann somit ein Vergleich mit denjenigen Empfangssignalen durchgeführt werden, die bei deaktivierter Sendeeinrichtung 13 ermittelt werden. Lediglich für diese Empfangselemente kann also eine Information darüber erhalten werden, ob das betreffende Empfangselement überhaupt empfangenes Licht in ein entsprechendes Empfangssignal umwandelt.

Falls sich dagegen, wie in Fig. 3 gezeigt, ein Objekt 21 innerhalb des Überwachungsbereichs 17 befindet, verschieben sich die beleuchteten Musterbereiche und damit die Lichtbeaufschlagung der entsprechenden Empfangselemente der Empfangseinrichtung 15. Dies ist darauf zurückzuführen, daß der Sensor 11 nach dem Triangulationsprinzip arbeitet, bei dem die optischen Achsen des Sendelichtstrahls und des empfangenen Lichts nicht parallel, sondern gewinkelt zueinander verlaufen, so daß eine Änderung der Entfernung des reflektierenden Objekts 21 zu einer Verschiebung des empfangsseitigen Lichtflecks führt.

Aufgrund dieser Umstände kann das Vorhandensein des in Fig. 3 gezeigten Objekts 21 innerhalb des Überwachungsbereichs 17 zu einem Beleuchtungsmuster führen, wie in Fig. 5 gezeigt. Hier wird der Hintergrund 19 anstelle des Musterbereichs 28 an dem benachbarten Musterbereich 31 von dem Sendelicht beaufschlagt. Dieser Effekt ist grundsätzlich erwünscht, da - beispielsweise durch Vergleich mit einem früheren Bild wie in Fig. 4 gezeigt - aus dieser Veränderung das Vorhandensein des Objekts 21 im Überwachungsbereich 17 detektiert werden kann.

Allerdings handelt es sich bei dem Empfangselement, das dem Musterbereich 31 entspricht und demzufolge nun lichtbeaufschlagt ist, um eines derjenigen Empfangselemente, für die bei objektfreiem Überwachungsbereich 17 kein zuverlässiger Funktionstest in der vorstehend beschriebenen Weise durchgeführt werden konnte. Mit anderen Worten könnte dieses nun lichtbeaufschlagte Empfangselement defekt sein, ohne daß dies vor dem eigentlichen Überwachungsbetrieb des Sensors 11 erkannt werden konnte. Dies kann dazu führen, daß die in den Fig. 4 und 5 gezeigte Verschiebung der Lichtbeaufschlagung vom Musterbereich 28 zum Musterbereich 31 nicht erkannt und somit das Vorhandensein des Objekts 21 fälschlicherweise ignoriert wird.

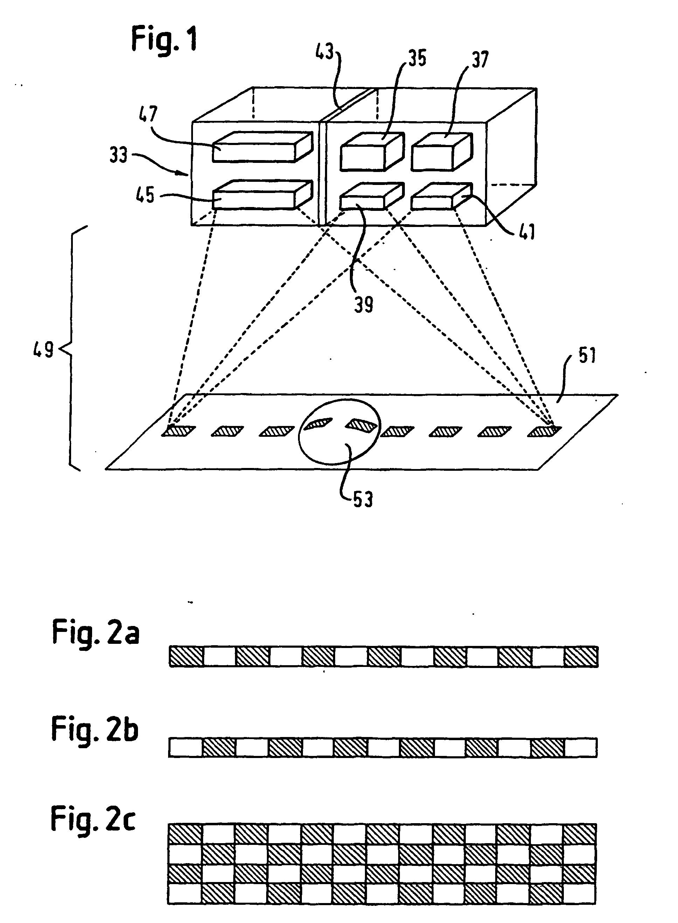

Dieser Mangel wird durch die Erfindung behoben, wie nachfolgend anhand der Fig. 1 sowie 2a und 2b erläutert wird.

Der in Fig. 1 gezeigte optoelektronische Sensor 33 besitzt zwei Sendeeinrichtungen 35, 37, denen jeweils als Sendeoptik ein diffraktives optisches Element 39 bzw. 41 zugeordnet ist. Die Sendeeinrichtungen 35, 37 sind beispielsweise durch Laserdioden gebildet.

Von den Sendeeinrichtungen 35, 37 durch eine Trennwand 43 getrennt weist der Sensor 33 ferner eine Empfangseinrichtung 45 auf, die beispielsweise durch eine CCD-Kamera gebildet ist. Außerdem enthält der Sensor 33 eine Steuer- und Auswerteeinrichtung 47.

Von den Sendeeinrichtungen 35, 37 wird Sendelicht in Richtung eines Überwachungsbereichs 49 ausgesandt, der durch einen Hintergrund 51 begrenzt ist. Dabei bewirkt das jeweils zugeordnete diffraktive optische Element 39 bzw. 41, daß das Sendelicht gemäß einem Beleuchtungsmuster strukturiert ist. Dieses Sendelicht wird vom Hintergrund 51 oder von einem sich innerhalb des Überwachungsbereichs 49 befindlichen Objekt 53 reflektiert und über eine - nicht dargestellte - Empfangsoptik von der Empfangseinrichtung 45 erfaßt.

Die Empfangseinrichtung 45 besitzt eine Vielzahl von Empfangselementen, um die Struktur des gemäß einem der Beleuchtungsmuster ausgesandten, reflektierten und erfaßten Sendelichts auflösen zu können, wie bereits anhand der Fig. 4 und 5 erläutert. Die Empfangseinrichtung 45 wandelt das empfangene Licht empfangselementweise in Empfangssignale um und gibt diese an die Steuer- und Auswerteeinrichtung 47 weiter.

Fig. 2a und 2b zeigen die beiden durch die diffraktiven optischen Elemente 39 bzw. 41 hervorgerufenen Beleuchtungsmuster, wie sie bei objektfreiem Überwachungsbereich 49 am Hintergrund 51 bzw. - nach Reflexion - an der Empfangseinrichtung 45 erscheinen. Bei diesen Beleuchtungsmustern handelt es sich um äquidistant alternierende, lineare Muster. Die beiden Beleuchtungsmuster sind, wie die Gegenüberstellung gemäß Fig. 2a und 2b zeigt, um 180° phasenverschoben zueinander. Sie sind somit genau komplementär zueinander strukturiert.

Der Sensor 33 gemäß Fig. 1 erlaubt die beiden folgenden Funktionsweisen:

Erstens kann das Vorhandensein eines Objekts 53 innerhalb des Überwachungsbereichs 49 detektiert werden. Hierfür wird mittels jeweils einer der beiden Sendeeinrichtungen 35, 37 Sendelicht gemäß dem entsprechenden Beleuchtungsmuster in den Überwachungsbereich 49 ausgesandt und nach Reflexion von der Empfangseinrichtung 45 erfaßt. Die dabei ermittelten Empfangssignale bzw. deren verarbeitete Daten werden von der Steuer- und Auswerteeinrichtung 47 verglichen mit Empfangssignalen bzw. deren Daten, die unter Einsatz derselben Sendeeinrichtung 35 bzw. 37 - und somit desselben Beleuchtungsmusters - zu einem früheren Zeitpunkt ermittelt und abgespeichert worden sind. Diese Vergleichswerte können - vor dem eigentlichen Überwachungsbetrieb des Sensors 33 - während eines Kalibrierungsbetriebs ermittelt worden sein, bei dem noch kein Objekt 53 innerhalb des Überwachungsbereichs 49 angeordnet war. Auf diese Weise kann das Vorhandensein eines Objekts 53 detektiert werden.

Alternativ hierzu kann es sich bei dem genannten früheren Zeitpunkt um denjenigen Zeitpunkt handeln, zu dem die betreffende Sendeeinrichtung 35 bzw. 37 - und somit das entsprechende Beleuchtungsmuster - zuletzt aktiviert worden war, um die entsprechenden Empfangssignale zu ermitteln. Bei dieser Vorgehensweise kann eine zwischenzeitlich erfolgte Bewegung eines Objekts 53 innerhalb des Überwachungsbereich 49 erkannt werden.

In beiden Fällen kann für den Vergleich der Empfangssignale mit Kalibrierungswerten bzw. mit früher ermittelten Werten von der Steuer- und Auswerteeinrichtung 47 ein jeweiliger Schwellenwert zugrunde gelegt werden, um lediglich im Falle einer hinreichend großen Veränderung ein Warnsignal, Abschaltsignal oder Gegenstandsfeststellungssignal auszugeben.

Dieser Überwachungsbetrieb des Sensors 33 wird auf Grundlage sowohl des von der Sendeeinrichtung 35 ausgesandten Sendelichts als auch des von der Sendeeinrichtung 37 ausgesandten Sendelichts durchgeführt, wobei der erläuterte Vergleich mit früheren Empfangssignalen jeweils hinsichtlich desselben Beleuchtungsmusters durchgeführt wird.

Zweitens kann bei dem Sensor 33 gemäß Fig. 1 ein vollständiger Test aller relevanten Empfangselemente der Empfangseinrichtung 45 durchgeführt werden. Hierfür werden zum einen die Empfangssignale der Empfangseinrichtung 45 ermittelt, wenn Sendelicht von einer der Sendeeinrichtungen 35 oder 37 ausgesandt wird und nach Reflexion die Empfangseinrichtung 45 beaufschlagt. Dies erfolgt insbesondere - jedoch nicht notwendigerweise - bei objektfreiem Überwachungsbereich 49. Zum anderen können zusätzlich die Empfangssignale der Empfangseinrichtung 45 ermittelt werden, während keine der Sendeeinrichtungen 35, 37 Sendelicht emittiert. Die jeweils einander entsprechenden Empfangssignale, d. h. die Empfangssignale jeweils desselben Empfangselements der Empfangseinrichtung 45, werden miteinander verglichen. Falls ein hinreichender Unterschied besteht, kann darauf geschlossen werden, daß das betreffende Empfangselement funktionstüchtig ist.

Aufgrund der zueinander komplementären Ausbildung der Beleuchtungsmuster gemäß Fig. 2a und 2b werden somit alle Empfangselemente der Empfangseinrichtung 45, die auch für den eigentlichen Überwachungsbetrieb des Sensors 33 herangezogen werden, auf ihre Funktionsfähigkeit getestet.

Für die beiden erläuterten Funktionsweisen des Sensors 33 (Überwachungsbetrieb und Test) sind beispielsweise die folgenden Abläufe möglich:
a) Zunächst werden in einer Testphase die Empfangselemente der Empfangseinrichtung 45 auf Funktionsfähigkeit getestet, indem bei objektfreiem Überwachungsbereich 49 Empfangssignale bei aktivierter Sendeeinrichtung 35, bei aktivierter Sendeeinrichtung 37 bzw. bei deaktivierter Sendeeinrichtung 35 und 37 ermittelt und auf die erläuterte Weise miteinander verglichen werden. Anschließend erfolgt der eigentliche Überwachungsbetrieb, bei dem die Sendeeinrichtungen 35 und 37 - und somit die unterschiedlichen Beleuchtungsmuster gemäß Fig. 2a und 2b - abwechselnd aktiviert werden, wobei nach jeder Aktivierung einer Sendeeinrichtung 35, 37 ein Vergleich der ermittelten Empfangssignale mit den Empfangssignalen erfolgt, die bei der vorherigen Aktivierung derselben Sendeeinrichtung 35 bzw. 37 ermittelt worden sind.
b) Oder während des Überwachungsbetriebs werden laufend Empfangssignale bei aktivierter Sendeeinrichtung 35, bei aktivierter Sendeeinrichtung 37 und bei deaktivierten Sendeeinrichtungen 35 und 37 ermittelt. Die Empfangssignale, die bei aktivierter Sendeeinrichtung 35 ermittelt werden, werden mit jenen Empfangssignalen verglichen, die bei letztmaliger Aktivierung derselben Sendeeinrichtung 35 ermittelt worden sind. Ein entsprechender Vergleich wird nach jeder Aktivierung der anderen Sendeeinrichtung 37 durchgeführt. Nach jeder Ermittlung der Empfangssignale bei deaktivierten Sendeeinrichtungen 35 und 37 wird der erläuterte Test der Empfangselemente durchgeführt, d. h. die Steuer- und Auswerteeinrichtung 37 vergleicht diese Empfangssignale mit den jeweils bei aktivierter Sendeeinrichtung 35 bzw. bei aktivierter Sendeeinrichtung 37 ermittelten Empfangssignalen.

Bei den beiden beispielhaft genannten Abläufen werden also sukzessive Daten über den Bildinhalt erzeugt, um bei signifikanten Abweichungen ein Gegenstandsfeststellungssignal bzw. ein Warn- oder Abschaltsignal zu erzeugen.

In beiden Fällen wird das Sendelicht vorzugsweise in Sendepulsen ausgesandt, wobei die Erzeugung der Empfangssignale mittels der Empfangseinrichtung 45 synchronisiert zum Aussenden der Sendepulse erfolgt. Diese Steuerung übernimmt die Steuer- und Auswerteeinrichtung 47.

Fig. 2c zeigt eine ebenfalls mögliche zweidimensionale Realisierung des Beleuchtungsmusters. Dadurch kann die Erfindung auch zur Überwachung eines dreidimensionalen Bereichs mit den gleichen Vorteilen wie vorstehend erläutert eingesetzt werden. Zu diesem Zweck ist vorzugsweise ein komplementäres zweidimensionales Beleuchtungsmuster vorgesehen (nicht dargestellt).

Zu der Erfindung ist noch anzumerken, daß die Empfangssignale zusätzlich hinsichtlich des Abstands eines innerhalb des Überwachungsbereichs 49 detektierten Objekts 53 ausgewertet werden können, um eine entsprechende Abstandsinformation auszugeben. Diese Abstandsinformation kann bei einer Triangulationsanordnung von Sendeeinrichtungen 35, 37 und Empfangseinrichtung 45 aufgrund einer Abweichung des Musters der empfangenen Lichtflecken von dem jeweils emittierten Beleuchtungsmuster gewonnen werden. Eine Ermittlung und Berücksichtigung des Abstands des Hintergrundes 51 vom Sensor 33 kann dazu beitragen, Manipulationen zu vermeiden, die beispielsweise dadurch bewirkt werden könnten, daß ein entsprechend codierter Hintergrund näher am Sensor 33 angeordnet wird, so daß hinter diesem "falschen" Hintergrund unzulässige Aktionen ausgeführt werden können, die durch den Sensor 33 gerade vermieden werden sollen.

Schließlich ist anzumerken, daß anstelle der in Fig. 1 gezeigten Reflexionsanordnung auch eine Durchlichtanordnung von Sendeeinrichtungen 35, 37 einerseits und Empfangseinrichtung 45 andererseits vorgesehen sein kann, bei der das Sendelicht den Überwachungsbereich 49 im wesentlichen geradlinig durchquert.

### Bezugszeichenliste

- 11: optoelektronischer Sensor
- 13: Sendeeinrichtung
- 15: Empfangseinrichtung
- 17: Überwachungsbereich
- 19: Hintergrund
- 21: Objekt
- 23: Musterbereich
- 24: Musterbereich
- 25: Musterbereich
- 26: Musterbereich
- 27: Musterbereich
- 28: Musterbereich
- 29: Musterbereich
- 31: Musterbereich
- 33: optoelektronischer Sensor
- 35: Sendeeinrichtung
- 37: Sendeeinrichtung
- 39: diffraktives optisches Element
- 41: diffraktives optisches Element
- 43: Trennwand
- 45: Empfangseinrichtung
- 47: Steuer- und Auswerteeinrichtung
- 49: Überwachungsbereich
- 51: Hintergrund
- 53: Objekt

## Patentansprüche

1. Verfahren zur Überwachung eines Überwachungsbereichs (49) mittels eines optoelektronischen Sensors (33), wobei
- gemäß einem strukturierten Beleuchtungsmuster Sendelicht in Richtung des Überwachungsbereichs (49) ausgesandt und aus dem Überwachungsbereich empfangen wird,
- das empfangene Licht mittels einer Empfangseinrichtung in Empfangssignale umgewandelt wird, und
- die Empfangssignale hinsichtlich des Vorhandenseins oder hinsichtlich einer Bewegung eines Objekts (53) im Überwachungsbereich (49) ausgewertet werden,
wobei das Sendelicht gemäß wenigstens zwei unterschiedlichen Beleuchtungsmustern ausgesandt und empfangen wird,
**dadurch gekennzeichnet,**
**daß** die Beleuchtungsmuster derart komplementär zueinander strukturiert sind, daß bei objektfreiem Überwachungsbereich letztlich alle Bereiche oder Elemente der Empfangseinrichtung von empfangenem Sendelicht beaufschlagt werden.

2. Verfahren nach Anspruch 1,
**dadurch gekennzeichnet,**
**daß** die Beleuchtungsmuster regelmäßig strukturiert sind, wobei es sich bei den Beleuchtungsmustern insbesondere um äquidistant alternierende Muster handelt, oder daß die Beleuchtungsmuster unregelmäßig strukturiert sind.

3. Verfahren nach einem der vorhergehenden Ansprüche,
**dadurch gekennzeichnet,**
**daß** die Beleuchtungsmuster um 180° phasenverschoben zueinander sind, und/oder
**daß** die Beleuchtungsmuster linienförmig oder matrixförmig sind, und/oder
**daß** es sich bei den Beleuchtungsmustern um Hell/Dunkel-Muster handelt.

4. Verfahren nach einem der vorhergehenden Ansprüche,
**dadurch gekennzeichnet,**
**daß** das Sendelicht abwechselnd gemäß den wenigstens zwei unterschiedlichen Beleuchtungsmustern ausgesandt und empfangen wird.

5. Verfahren nach einem der vorhergehenden Ansprüche,
**dadurch gekennzeichnet,**
**daß** die unterschiedlichen Beleuchtungsmuster jeweils durch eine zugeordnete Sendeeinrichtung (35, 37) erzeugt werden, und/oder
**daß** die unterschiedlichen Beleuchtungsmuster durch Verwendung unterschiedlicher Sendeoptiken (39, 41) erzeugt werden.

6. Verfahren nach einem der Ansprüche 1 bis 4, **dadurch gekennzeichnet,**
**daß** die unterschiedlichen Beleuchtungsmuster durch Verwendung unterschiedlicher Empfangsoptiken erzeugt werden.

7. Verfahren nach einem der vorhergehenden Ansprüche,
**dadurch gekennzeichnet,**
**daß** zur Erzeugung der unterschiedlichen Beleuchtungsmuster der Sendelichtstrahl und/oder ein Strahlbündel des empfangenen Lichts umgelenkt, verschoben oder verkippt wird.

8. Verfahren nach einem der vorhergehenden Ansprüche,
**dadurch gekennzeichnet,**
**daß** wenigstens ein Beleuchtungsmuster durch Verwendung eines diffraktiven optischen Elements (39, 41) erzeugt wird.

9. Verfahren nach einem der vorhergehenden Ansprüche,
**dadurch gekennzeichnet,**
**daß** Sendelicht empfangen und ausgewertet wird, das aus dem Überwachungsbereich (49) reflektiert oder remittiert worden ist, oder das den Überwachungsbereich im wesentlichen geradlinig durchquert hat.

10. Verfahren nach einem der vorhergehenden Ansprüche,
**dadurch gekennzeichnet,**
**daß** das Sendelicht in Sendepulsen ausgesandt wird, wobei der Empfang des Lichts aus dem Überwachungsbereich (49) vorzugsweise synchronisiert zur Emission der Sendepulse erfolgt.

11. Verfahren nach einem der vorhergehenden Ansprüche,
**dadurch gekennzeichnet,**
**daß** zur Auswertung des empfangenen Lichts die für ein bestimmtes Beleuchtungsmuster ermittelten Empfangssignale oder die aus diesen Empfangssignalen verarbeiteten Daten verglichen werden mit Empfangssignalen bzw. Daten, die für dasselbe Beleuchtungsmuster zu einem früheren Zeitpunkt ermittelt worden sind.

12. Verfahren nach Anspruch 11,
**dadurch gekennzeichnet,**
**daß** zu dem früheren Zeitpunkt der Überwachungsbereich (49) sich in einem - insbesondere objektfreien - Kalibrierungszustand befunden hat, oder daß es sich bei dem früheren Zeitpunkt um den Zeitpunkt des unmittelbar vorhergehenden Aussendens oder Empfangs desselben Beleuchtungsmusters handelt.

13. Verfahren nach einem der vorhergehenden Ansprüche,
**dadurch gekennzeichnet,**
**daß** ein Test eines fehlerfreien Empfangs von Licht durchgeführt wird, indem Empfangssignale bei ausgesandtem Sendelicht ermittelt und verglichen werden.

14. Verfahren nach Anspruch 13,
**dadurch gekennzeichnet,**
**daß** die Empfangssignale miteinander und/oder mit Empfangssignalen verglichen werden, die ermittelt werden, wenn kein Sendelicht ausgesandt worden ist.

15. Verfahren nach einem der Ansprüche 13 oder 14,
**dadurch gekennzeichnet,**
**daß** der Test für mehrere, insbesondere für alle unterschiedlichen Beleuchtungsmuster durchgeführt wird.

16. Verfahren nach einem der Ansprüche 13 bis 15,
**dadurch gekennzeichnet,**
**daß** die Empfangssignale bezüglich jeweils eines von mehreren Empfangselementen des optoelektronischen Sensors (33) miteinander verglichen werden.

17. Verfahren nach einem der Ansprüche 13 bis 16,
**dadurch gekennzeichnet,**
**daß** ein fehlerhafter Empfang festgestellt wird, wenn die jeweiligen Empfangssignale sich nicht oder geringfügiger als ein vorbestimmter Schwellenwert voneinander unterscheiden.

18. Verfahren nach einem der Ansprüche 13 bis 17,
**dadurch gekennzeichnet,**
**daß** der Test vor Beginn eines nachfolgenden Überwachungsbetriebs des optoelektronischen Sensors (33) und/oder während eines Überwachungsbetriebs des optoelektronischen Sensors (33) durchgeführt wird.

19. Verfahren nach einem der vorhergehenden Ansprüche,
**dadurch gekennzeichnet,**
**daß** das Verfahren zur Sicherung des Überwachungsbereichs (49) vor einem unbefugten Eingriff verwendet wird, und daß ein Abschaltsignal oder ein Warnsignal erzeugt wird, falls als Ergebnis einer Auswertung der Empfangssignale das Vorhandensein oder eine Bewegung eines Objekts (53) im Überwachungsbereich (49) festgestellt worden ist.

20. Verfahren nach einem der vorhergehenden Ansprüche,
**dadurch gekennzeichnet,**
**daß** die Empfangssignale zusätzlich hinsichtlich des Abstandes eines innerhalb des Überwachungsbereichs (49) befindlichen Objekts (53) ausgewertet werden, insbesondere durch Berücksichtigung eines aufgrund einer Triangulationsanordnung divergenten Strahlenganges.

21. Optoelektronischer Sensor (33) zur Überwachung eines Überwachungsbereichs (49), mit
- wenigstens einer Sendeeinrichtung (35, 37) zum Aussenden von Sendelicht in Richtung des Überwachungsbereichs (49),
- wenigstens einer Empfangseinrichtung (45) zum Umwandeln von aus dem Überwachungsbereich (49) empfangenem Licht in Empfangssignale, und
- einer Auswerteeinrichtung (47) zum Auswerten der Empfangssignale hinsichtlich des Vorhandenseins oder hinsichtlich einer Bewegung eines Objekts (53) im Überwachungsbereich (49),
wobei die wenigstens eine Sendeeinrichtung (35, 37) und die wenigstens eine Empfangseinrichtung (45) zum Aussenden bzw. Empfangen von wenigstens zwei unterschiedlichen strukturierten Beleuchtungsmustern ausgebildet sind,
**dadurch gekennzeichnet,**
**daß** die Beleuchtungsmuster derart komplementär zueinander strukturiert sind, daß bei objektfreiem Überwachungsbereich letztlich alle Bereiche oder Elemente der Empfangseinrichtung von empfangenem Sendelicht beaufschlagt werden.

22. Sensor nach Anspruch 21,
**dadurch gekennzeichnet,**
**daß** die Sendeeinrichtung (35, 37) und die Empfangseinrichtung (45) zum abwechselnden Aussenden bzw. Empfangen der unterschiedlichen Beleuchtungsmuster ausgebildet sind.

23. Sensor nach einem der Ansprüche 21 oder 22,
**dadurch gekennzeichnet,**
**daß** zum Aussenden der unterschiedlichen Beleuchtungsmuster jeweils eine eigene Sendeeinrichtung (35, 37) vorgesehen ist,
und/oder
**daß** zum Aussenden der unterschiedlichen Beleuchtungsmuster jeweils eine eigene Sendeoptik (39, 41) vorgesehen ist.

24. Sensor nach einem der Ansprüche 21 bis 23,
**dadurch gekennzeichnet,**
**daß** die Sendeeinrichtung (35, 37) und die Empfangseinrichtung (47) in einer Reflexionsanordnung oder in einer Durchlichtanordnung angeordnet sind.

## Claims

1. A method of monitoring a monitored zone (49) by means of an optoelectronic sensor (33), wherein
- in accordance with a structured light pattern, transmitted light is transmitted in the direction of the monitored zone (49) and is received from the monitored zone;
- the received light is converted into received signals by means of a receiver device; and
- the received signals are evaluated with respect to the presence of an object (53), or with respect to a movement of an object (53), in the monitored zone (49),
wherein the transmitted light is transmitted and received in accordance with at least two different light patterns,
**characterized in that** the light patterns are structured in a complementary manner to one another such that, with a monitored zone free of objects, ultimately all regions or elements of the receiver device are acted on by received transmitted light.

2. A method in accordance with claim 1, **characterized in that** the light patterns have a regular structure, with the light patterns in particular being equi-distantly alternating patterns; or **in that** the light patterns have an irregular structure.

3. A method in accordance with any one of the preceding claims, **characterized in that** the light patterns are phase-shifted by 180° with respect to one another; and/or **in that** the light patterns are linear or of matrix shape; and/or **in that** the light patterns are light/ dark patterns.

4. A method in accordance with any one of the preceding claims, **characterized in that** the transmitted light is transmitted and received alternately in accordance with the at least two different light patterns.

5. A method in accordance with any one of the preceding claims, **characterized in that** the different light patterns are each produced by an associated transmission device (35, 37); and/or **in that** the different light patterns are produced by the use of different optical transmission systems (39, 41).

6. A method in accordance with any one of the claims 1 to 4, **characterized in that** the different light patterns are produced by the use of different optical reception systems.

7. A method in accordance with any one of the preceding claims, **characterized in that** the transmitted light beam and/or a bundle of rays of the received light is deflected, shifted or tilted to produce the different light patterns.

8. A method in accordance with any one of the preceding claims, **characterized in that** at least one light pattern is produced by the use of a diffractive optical element (39, 41).

9. A method in accordance with any one of the preceding claims, **characterized in that** transmitted light is received and evaluated which has been reflected or remitted from the monitored zone (49), or which has substantially passed through the monitored zone in a straight line.

10. A method in accordance with any one of the preceding claims, **characterized in that** the transmitted light is transmitted in transmitted pulses, with the reception of the light from the monitored zone (49) preferably taking place in synchronization with the emitting of the transmitted pulses.

11. A method in accordance with any one of the preceding claims, **characterized in that**, for the evaluation of the received light, the received signals determined for a specific light pattern, or the data processed from these received signals, are compared with received signals or data which were determined for the same light pattern at an earlier time.

12. A method in accordance with claim 11, **characterized in that** the monitored zone (49) was in a calibration state - in particular an object-free calibration state - at the earlier time; or **in that** the earlier time is the time of the directly preceding transmission or reception of the same light pattern.

13. A method in accordance with any one of the preceding claims, **characterized in that** a test of an error-free reception of light is carried out **in that** received signals are determined and compared under emitted transmitted light

14. A method in accordance with claim 13, **characterized in that** the received signals are compared with one another and/or with received signals which are determined when no transmitted light has been transmitted.

15. A method in accordance with any one of the claims 13 or 14, **characterized in that** the test is carried out for a plurality of light patterns, in particular for all different light patterns.

16. A method in accordance with any one of the claims 13 to 15, **characterized in that** the received signals are compared with one another with respect to a respective one of a plurality of reception elements of the optoelectronic sensor (33).

17. A method in accordance with any one of the claims 13 to 16, **characterized in that** a defective reception is detected if the respective received signals do not differ from one another or differ from one another by less than a pre-determined threshold.

18. A method in accordance with any one of claims 13 to 17, **characterized in that** the test is carried out before the start of a subsequent monitoring operation of the optoelectronic sensor (33) and/or during a monitoring operation of the optoelectronic sensor (33).

19. A method in accordance with any one of the preceding claims, **characterized in that** the method is used for the securing of the monitored zone (49) against unauthorized intrusion; and **in that** a switching off signal or a warning signal is produced if the presence of an object (53), or a movement of an object (53), in the monitored zone (49) was detected as the result of an evaluation of the received signals.

20. A method in accordance with any one of the preceding claims, **characterized in that** the received signals are additionally evaluated with respect to the distance of an object (53) located within the monitored zone (49), in particular by taking into account a beam path which diverges due to a triangulation arrangement.

21. An optoelectronic sensor (33) for the monitoring of a monitored zone (49) comprising
- at least one transmission device (35, 37) for the transmission of transmitted light in the direction of the monitored zone (49);
- at least one reception device (45) for the conversion of light received from the monitored zone (49) into received signals; and
- an evaluation device (47) for the evaluation of the received signals with respect to the presence of an object (53), or to a movement of an object (53), in the monitored zone (49),
wherein the at least one transmission device (35, 37) and the at least one reception device (45) is formed for the transmission or reception of at least two differently structured light patterns,
**characterized in that** the light patterns are structured in a complementary manner to one another such that, with a monitored zone free of objects, ultimately all regions or elements of the receiver device are acted on by received transmitted light.

22. A sensor in accordance with claim 21, **characterized in that** the transmission device (35, 37) and the reception device (45) are formed for the alternating transmission or reception, respectively, of the different light patterns.

23. A sensor in accordance with any one of the claims 21 or 22, **characterized in that** a respective separate transmission device (35, 37) is provided for the transmission of the different light patterns; and/or **in that** a respective separate optical transmission system (39, 41) is provided for the transmission of the different light patterns.

24. A sensor in accordance with any one of claims 21 to 23, **characterized in that** the transmission device (35, 37) and the reception device (47) are arranged in a reflection arrangement or in a transmission arrangement.

## Revendications

1. Procédé de surveillance d'une zone (49) à surveiller au moyen d'un capteur optoélectronique (33), dans lequel
- de la lumière émise est diffusée en direction de la zone (49) à surveiller et est reçue en provenance de ladite zone à surveiller, conformément à un profil d'illumination structuré,
- la lumière reçue est convertie en des signaux de réception, au moyen d'un dispositif récepteur, et
- lesdits signaux de réception sont interprétés quant à la présence ou quant à un mouvement d'un objet (53) dans la zone (49) à surveiller,
sachant que la lumière émise est diffusée et reçue conformément à au moins deux profils d'illumination différents,
**caractérisé par le fait**
**que** les profils d'illumination sont structurés avec une complémentarité mutuelle telle que, lorsque la zone à surveiller est exempte d'objet, toutes les régions ou tous les éléments du dispositif récepteur sont sollicité(e)s en définitive par la lumière émise reçue.

2. Procédé selon la revendication 1,
**caractérisé par le fait**
**que** les profils d'illumination sont structurés de manière régulière, lesdits profils d'illumination se présentant notamment comme des profils alternants de façon équidistante ; ou que lesdits profils d'illumination sont structurés de manière irrégulière.

3. Procédé selon l'une des revendications précédentes,
**caractérisé par le fait**
**que** les profils d'illumination sont mutuellement déphasés de 180° ; et/ou
**que** lesdits profils d'illumination revêtent la forme de lignes ou de matrices ; et/ou
**que** lesdits profils d'illumination se présentent comme des profils clairs/foncés.

4. Procédé selon l'une des revendications précédentes,
**caractérisé par le fait**
**que** la lumière émise est diffusée et reçue, en alternance, conformément aux deux profils d'illumination différents, prévus au minimum.

5. Procédé selon l'une des revendications précédentes,
**caractérisé par le fait**
**que** les profils d'illumination différents sont respectivement engendrés par l'intermédiaire d'un dispositif émetteur associé (35, 37) ; et/ou
**que** lesdits profils d'illumination différents sont engendrés par utilisation d'optiques émettrices différentes (39, 41).

6. Procédé selon l'une des revendications 1 à 4,
**caractérisé par le fait**
**que** les profils d'illumination différents sont engendrés par utilisation d'optiques réceptrices différentes.

7. Procédé selon l'une des revendications précédentes,
**caractérisé par le fait**
**que** le rayon de lumière émise et/ou un faisceau de rayons de la lumière reçue est (sont) dévié(s), décalé(s) ou basculé (s) en vue de la génération des profils d'illumination différents.

8. Procédé selon l'une des revendications précédentes,
**caractérisé par le fait**
**qu'**au moins un profil d'illumination est engendré par utilisation d'un élément optique (39, 41) à diffraction.

9. Procédé selon l'une des revendications précédentes,
**caractérisé**
**par** la réception et l'interprétation d'une lumière émise qui a été produite par réflexion ou par réflectance depuis la zone (49) à surveiller ou qui a franchi ladite zone à surveiller, pour l'essentiel en ligne droite.

10. Procédé selon l'une des revendications précédentes,
**caractérisé par le fait**
**que** la lumière émise est diffusée en des impulsions d'émission, la réception de la lumière émanant de la zone (49) à surveiller ayant lieu, de préférence, en synchronisme avec l'émission des impulsions d'émission.

11. Procédé selon l'une des revendications précédentes,
**caractérisé par le fait**
**que**, en vue de l'interprétation de la lumière reçue, les signaux de réception établis pour un profil d'illumination déterminé, ou les données traitées sur la base de ces signaux de réception, sont respectivement comparé(e)s à des signaux de réception ou à des données qui ont été établi(e)s à un stade antérieur pour le même profil d'illumination.

12. Procédé selon la revendication 11,
**caractérisé par le fait**
**que** la zone (49) à surveiller s'est trouvée, au stade antérieur, dans un état de calibrage - notamment exempt d'objet - ; ou que ledit stade antérieur se présente comme l'instant de la diffusion ou de la réception, immédiatement précédente, du même profil d'illumination.

13. Procédé selon l'une des revendications précédentes,
**caractérisé**
**par** l'exécution d'un test de réception défectueuse de lumière, en établissant et en comparant les signaux de réception en présence d'une lumière émise diffusée.

14. Procédé selon la revendication 13,
**caractérisé par le fait**
**que** les signaux de réception sont comparés les uns aux autres et/ou à des signaux de réception établis lorsqu'aucune lumière émise n'a été diffusée.

15. Procédé selon l'une des revendications 13 ou 14,
**caractérisé par le fait**
**que** le test est effectué pour plusieurs, notamment pour tous les profils d'illumination différents.

16. Procédé selon l'une des revendications 13 à 15,
**caractérisé par le fait**
**que** les signaux de réception sont comparés les uns aux autres concernant, respectivement, l'un parmi plusieurs éléments récepteurs du capteur optoélectronique (33).

17. Procédé selon l'une des revendications 13 à 16,
**caractérisé par le fait**
**qu'**une réception défectueuse est constatée lorsque les signaux respectifs de réception ne diffèrent pas les uns des autres ou diffèrent légèrement moins qu'une valeur de seuil prédéterminée.

18. Procédé selon l'une des revendications 13 à 17,
**caractérisé par le fait**
**que** le test est effectué avant le début d'un mode surveillance suivant du capteur optoélectronique (33) et/ou au cours d'un mode surveillance dudit capteur optoélectronique (33).

19. Procédé selon l'une des revendications précédentes,
**caractérisé par le fait**
**que** ledit procédé est utilisé pour assurer la sécurité contre une pénétration non autorisée dans la zone (49) à surveiller ; et par le fait qu'un signal de déconnexion ou un signal d'alerte est engendré pour le cas où la présence ou un mouvement d'un objet (53) a été constaté(e) en tant que résultat d'une interprétation des signaux de réception.

20. Procédé selon l'une des revendications précédentes,
**caractérisé par le fait**
**que** les signaux de réception sont additionnellement interprétés quant à la distance d'un objet (53) situé à l'intérieur de la zone (49) à surveiller, en prenant notamment en considération une allure de rayonnement divergente du fait d'une disposition en triangulation.

21. Capteur optoélectronique (33) pour la surveillance d'une zone (49) à surveiller, comprenant
- au moins un dispositif émetteur (35, 37) pour diffuser de la lumière émise en direction de la zone (49) à surveiller,
- au moins un dispositif récepteur (45) pour convertir, en des signaux de réception, de la lumière reçue en provenance de la zone (49) à surveiller, et
- un dispositif d'interprétation (47) pour interpréter les signaux de réception quant à la présence ou quant à un mouvement d'un objet (53) dans ladite zone (49) à surveiller,
sachant que le dispositif émetteur (35, 37) prévu au minimum et le dispositif récepteur (45) prévu au minimum sont respectivement conçus pour diffuser et recevoir au moins deux profils différents d'illumination structurés,
**caractérisé par le fait**
**que** les profils d'illumination sont structurés avec une complémentarité mutuelle telle que, lorsque la zone à surveiller est exempte d'objet, toutes les régions ou tous les éléments du dispositif récepteur sont sollicité(e)s en définitive par la lumière émise reçue.

22. Capteur selon la revendication 21,
**caractérisé par le fait**
**que** le dispositif émetteur (35, 37) et le dispositif récepteur (45) sont respectivement conçus pour la diffusion et la réception alternées des différents profils d'illumination.

23. Capteur selon l'une des revendications 21 ou 22,
**caractérisé par le fait**
**qu'**un propre dispositif émetteur (35, 37) est respectivement prévu pour diffuser les différents profils d'illumination ; et/ou
**qu'**une propre optique émettrice (39, 41) est prévue pour diffuser les différents profils d'illumination.

24. Capteur selon l'une des revendications 21 à 23, **caractérisé par le fait**
**que** le dispositif émetteur (35, 37) et le dispositif récepteur (47) sont agencés dans un ensemble de réflexion ou dans un ensemble à lumière transmise.
